# EUROPÄISCHE PATENTSCHRIFT

(11) **EP 0 421 115 B1**
(45) Veröffentlichungstag und Bekanntmachung des Hinweises auf die Patenterteilung: **02.06.1993**
(21) Anmeldenummer: 90116340.2
(22) Anmeldetag: 27.08.1990
(51) Int. Cl.: B60J 7/22

(54) **Windabweiser für Schiebedächer, herausnehmbare Dachabschnitte oder dergleichen bei Kraftfahrzeugen**
Wind deflector for sliding roof, detachable roof or the like for motor vehicles
Déflecteur de vent pour toit coulissant, toit amovible ou similaires pour véhicules automobiles

(30) Priorität: 30.09.1989 DE 3932739
(43) Veröffentlichungstag der Anmeldung: 10.04.1991
(73) Patentinhaber: Dr.Ing.h.c. F. Porsche Aktiengesellschaft, 70435 Stuttgart (DE)
(72) Erfinder: Eberius, Jens, Dipl.-Ing., D-7257 Ditzingen 5 (DE); Gerhard, Hans-Martin, D-7140 Ludwigsburg (DE)

(56) Entgegenhaltungen:
- DE-A- 2 339 680
- GB-A- 2 079 697
- GB-A- 2 157 634

## Beschreibung

Die Erfindung bezieht sich auf einen Windabweiser für Schiebedächer, herausnehmbare Dachabschnitte oder dergleichen von Kraftfahrzeugen gemäß dem Oberbegriff des Anspruchs 1.

Derartige Windabweiser sollen während der Fahrt auftretende störende Windgeräusche vermindern sowie die im Fahrzeuginnenraum befindliche Luft vor für die Insassen unangenehmen tieffrequenten Schwingungen bewahren (Schiebedachwummern). Ausgelöst werden diese Schwingungen dadurch, daß die über das Fahrzeugdach geleitete Luftströmung am vorderen querverlaufenden Rand des Dachausschnittes bzw. am Windabweiser abreißt und vor allem bei langsamer Fahrgeschwindigkeit nicht den Dachausschnitt überwindet, sondern in den darunterliegenden Fahrgastraum einströmt. Gleichzeitig wird jedoch durch die erhöhte Strömungsgeschwindigkeit über dem Dachausschnitt ein Unterdruck im Fahrgastraum erzeugt, der bestrebt ist, von dort Luft abzusaugen. Beide Strömungen bewirken störende Wirbel, die sich periodisch ablösend bilden. Dadurch erfolgt eine Pulsation der Luftsäule im Fahrgastraum, die nahe der Resonanzfrequenz zu erheblicher Belästigung (Geräusche, Ohrendruck) führt.

Einer bekannten Anordnung der eingangs genannten Gattung (DE-AS 23 39 680) ist ein Windabweiser für ein Schiebedach zu entnehmen, welcher benachbart dem vorderen querverlaufenden Rand des Dachausschnittes angeordnet und in einer Rinne unterhalb des Dachausschnittes schwenkbar gelagert ist. Der durch ein Tragflügelprofil gebildete Windabweiser ist von einer versenkten Ruhestellung nach oben in eine hochgeschwenkte Betriebsstellung bewegbar und umgekehrt. In der Betriebsstellung verläuft der Windabweiser unter einem negativen Anstellwinkel und überragt die Dachkontur geringfügig nach oben hin. Nachteilig an dieser Anordnung ist, daß es aufgrund des geringen Überstandes des Windabweisers in der Betriebsstellung je nach Öffnungslänge des Dachausschnittes vorkommen kann, daß trotz hochgeschwenktem Windabweiser die über das Fahrzeugdach geleitete Luftströmung den Dachausschnitt nicht vollständig überwindet und in den darunterliegenden Fahrgastraum einströmt, wodurch das unangenehme Schiebedachwummern auftritt. Durch die tiefliegende Lage des Tragflügelprofils wird nur dessen Oberseite angeströmt und somit der Luftstrom nach oben abgeleitet, wogegen die Unterseite des Tragflügelprofils funktionslos bleibt.

Aus der DE-OS 23 39 679 ist ein durch ein Tragflügelprofil gebildeter Windabweiser für ein Schiebedach bekannt, welcher etwa im Bereich der halben Öffnungslänge des Schiebedaches angeordnet ist und unter einem negativen Anstellwinkel verläuft. Der querverlaufende Windabweiser erstreckt sich vollständig oberhalb einer ideellen Dachkontur, wobei ein vorderer Rand des Windabweisers etwa in Höhe der ideellen Dachkontur verläuft.

Aufgrund der Lage des Tragflügelprofils wirkt auch hier der die Fahrzeugoberseite passierende Luftstrom nur mit der Oberseite des Tragflügelprofils zusammen, wogegen an der Unterseite des Tragflügelprofils keine Umströmung auftritt. Bei dieser Windabweiseranordnung kann es vorkommen, daß ein Teilbereich des Luftstromes schon vor dem Windabweiser abreißt und in den darunterliegenden Fahrgastraum einströmt, wodurch im Fahrzeuginnenraum unangenehme Schwingungen (Schiebedachwummern) auftreten. Strömungstechnisch gesehen bewirkt die in Strömungsrichtung zunehmende Querschnittsfläche des Tragflügelprofils, daß dieses nicht widerstandsarm angeströmt wird und daß der Luftstrom hinter dem Tragflügelprofil abreißt bzw. verwirbelt. Für einen herausnehmbaren Dachabschnitt wäre die Anordnung des Windabweisers etwa im Bereich der halben Öffnungslänge des Daches nur bedingt geeignet, da vor dem Herausnehmen des Dachabschnitts stets der Windabweiser abgenommen werden müßte.

Aufgabe der Erfindung ist es, an einem Kraftfahrzeug mit einem Schiebedach, einen herausnehmbaren Dach oder dergleichen und einem Windabweiser solche Vorkehrungen zu treffen, daß im Fahrbetrieb bei geöffnetem Dach das Auftreten der störenden Schwingungen im Fahrgastraum (Schiebedachwummern) zuverlässig vermieden und daß der Luftwiderstand des Fahrzeuges nur unwesentlich beeinflußt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch das beidseitig umströmte Tragflügelprofil die Strömung zwangsweise sauber über die Dachöffnung hinweg geleitet wird, ohne daß ein Teilluftstrom in den Fahrgastraum eindringt. Das Auftreten von unangenehmen Resonanzfrequenzen (Schiebedachwummern) wird zuverlässig verhindert, der Lärmpegel im Fahrgastraum liegt deutlich niedriger und der Luftwiderstand wird im wesentlichen beibehalten.

Ein Ausführungsbeispiel ist in der Zeichnung dargestellt und wird im folgenden näher erläutert.
Es zeigt
- Fig. 1: eine Teilseitenansicht auf einen Personenwagen mit einem offenen Dachausschnitt und einem hochgeschwenkten, sich in Betriebsstellung befindlichen Windabweiser,
- Fig. 2: eine Einzelheit X der Fig. 1 in größerem Maßstab,
- Fig. 3: einen Längsschnitt durch das Dach mit dem Verstellmechanismus für den Windabweiser.

Ein Kraftfahrzeug 1 weist im dargestellten Bereich einen Aufbau 2 auf, der eine Windschutzscheibe 3, eine Tür 4, ein Fondseitenteil 5, ein Dach 6 und eine Heckklappe 7 umfaßt.

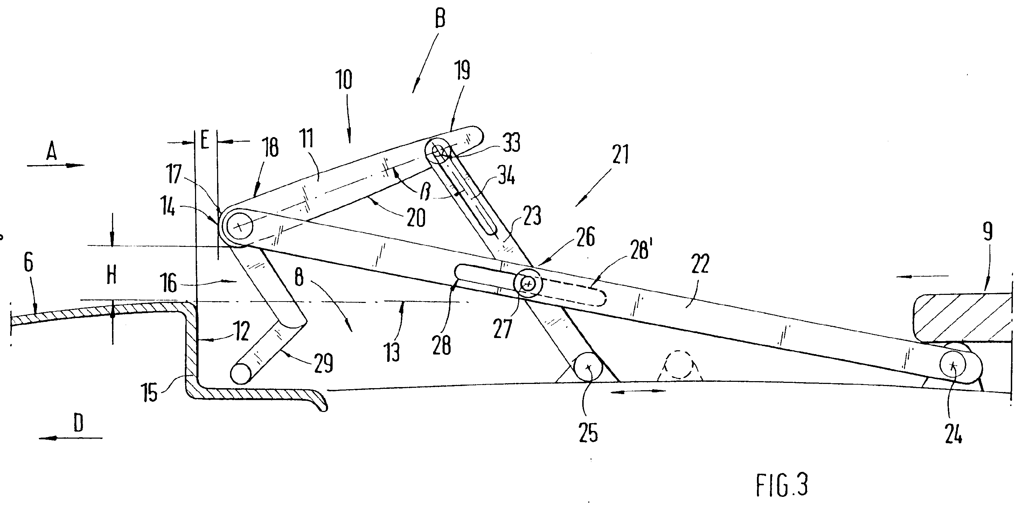

Das mit einem Schiebedach, einem herausnehmbaren Dachabschnitt oder dergleichen versehene Kraftfahrzeug 1 weist einen etwa rechteckförmigen Dachausschnitt 8 auf, der durch einen Deckel 9 bzw. einen Schiebedeckel verschließbar ist (Fig.3).

Zur Reduzierung der während der Fahrt auftretenden Windgeräusche sowie zur Vermeidung des Schiebedachwummerns (tieffrequente Schwingungen im Fahrgastraum) ist ein Windabweiser 10 vorgesehen, der von einem in Fahrzeugquerrichtung verlaufenden Tragflügelprofil 11 gebildet wird. Der Windabweiser 10 ist benachbart einem vorderen Rand 12 des Dachausschnittes 8 angeordnet und von einer nicht näher dargestellten eingefahrenen Ruhestellung in eine ausgefahrene Betriebsstellung B bewegbar und umgekehrt.

In der Betriebsstellung B verläuft das Tragflügelprofil 11 unter einem negativen Anstellwinkel α, wobei der Anstellwinkel α im Bereich zwischen 0 und 30° liegt.

Erfindungsgemäß ist das Tragflügelprofil 11 in der Betriebsstellung B oberhalb des Daches 6 bzw. der ideellen Dachkontur 13 angeordnet, so daß zwangsweise ein beidseitiges Umströmen des Tragflügelprofils 11 durch den im Fahrbetrieb auftretenden Luftstrom C erfolgt.

Gemäß Fig. 3 verläuft eine vordere Begrenzungskante 14 des Tragflügelprofils 11 in der Betriebsstellung B geringfügig nach hinten versetzt (Maß E) zu einem vertikalen Flansch 15 des Dachausschnittes 8. Das Maß E ergibt sich aus der kreisförmigen Bewegung eines Hebels 22. Zwischen dem obenliegenden angestellten Tragflügelprofil 11 und der darunterliegenden Dachkontur 13 verläuft ein Spalt 16, dessen lichte Höhe H je nach Fahrzeugform und Größe des Dachausschnittes 8 etwa zwischen 5 und 15 mm beträgt. Die lichte Höhe H des Spaltes 16 ist über ihre gesamte Quererstreckung etwa gleichbleibend.

Das Tragflügelprofil 11 ist derart angeordnet, daß sich die Querschnittsfläche des Tragflügelprofils 11 in Strömungsrichtung A gesehen verkleinert. Der dickere, mit einer Nasenrundung 17 versehene vordere Endbereich 18 des Tragflügelprofils 11 ist dem vorderen Rand 12 des Dachausschnittes 8 zugekehrt. Der hintere Bereich 19 des Tragflügelprofils 11 ist nach oben hin angestellt und weist einen größeren Abstand zur ideellen Dachkontur 13 auf als der vordere Endbereich 18.

Die lichte Höhe H des Spaltes 16 und die Anstellung α des Tragflügelprofils 11 ist von der Fahrzeugform und von der Größe des Dachausschnittes 8 abhängig und muß für jedes Fahrzeug empirisch ermittelt werden.

Durch die erfindungsgemäße Anordnung des Tragflügelprofils 11 wird bewußt eine Strömung an der Unterseite 20 des Tragflügelprofils 11 erzeugt. Der angestellte, umströmte Windabweiser 10 lenkt den Luftstrom C so weit nach oben ab, daß in Wechselwirkung mit dem unter dem Tragflügelprofil 11 hindurchströmenden Luftanteil ein Lufteintritt in den Dachausschnitt 8 vermieden wird und im Gegensatz zum einseitig angeströmten Windabweiser 10 die Aerodynamik-Beiwerte niedrig bleiben.

Durch den beidseitig umströmten Windabweiser 10 wird eine Geräuschabsenkung im Fahrzeuginnenraum sowie eine Vermeidung tieffrequenter Resonanzschwingungen bei gleichzeitiger Beachtung der Fahrzeugaerodynamik (nur geringfügig ansteigender Luftwiderstandsbeiwert gegenüber geschlossenem Dach, Beibehaltung eines geringen Hinterachsauftriebes durch das Nichtabreißen der Strömung am angestellten Windabweiser) erzielt.

Zur Bewegung des Windabweisers 10 ist an beiden Längsseiten des Dachausschnittes 8 ein Verstellmechanismus 21 vorgesehen. Jeder Verstellmechanismus 21 umfaßt zwei Hebel 22,23, welche kreuzweise zueinander angeordnet sind. Der erste Hebel 22 verbindet einen vorderen Randbereich 18 des Tragflügelprofils 11 mit einem, in Fahrtrichtung gesehen, hintenliegenden dachseitigen Anlenkpunkt 24. Der zweite Hebel 23 erstreckt sich zwischen einem hinteren Bereich 19 des Tragflügelprofils 11 und einem vorderen dachseitigen Anlenkpunkt 25. Die Verbindung des hinteren Endbereichs (19) mit dem Hebel (23) erfolgt über einen abgestellten Bolzen (33) des Windabweisers (10) bzw. des Tragflügelprofils (11), der in einer länglichen Schlitzführung (34) des Hebels (23) verschiebbar geführt ist. Beide Hebel 22,23 sind im Kreuzungsbereich 26 miteinander verbunden, wobei ein abgestellter Bolzen 27 des zweiten Hebels 23 mit einer länglichen Schlitzführung 28 des ersten Hebels 22 zusammenwirkt.

In der Betriebsstellung B nimmt das Tragflügelprofil 11 gegenüber dem Hebel 23 einen Winkel β von > 90° ein (Fig.3).

Das Tragflügelprofil 11 und die Hebel 22,23 werden in nicht näher dargestellter Weise durch Federelemente, beispielsweise durch Spiralfedern, selbsttätig in die hochgeschwenkte Betriebsstellung B bewegt, sobald der Schiebedeckel 9 um einen bestimmten Betrag nach hinten verschoben wird bzw. wenn der Deckel aus dem Dachabschnitt 8 entfernt wird.

Beim Nachvornebewegen des Schiebedeckels 9 wird durch das Zusammenwirken von Schiebedeckel 9 und Verstellmechanismus 21 der Windabweiser 10 selbsttätig nach unten in die versenkte Ruhestellung bewegt.

Gemäß Fig. 3 ist in einem mittleren Bereich der Quererstreckung des Tragflügelprofils 11 ein Federelement 29 vorgesehen, welches eine zusätzliche Abstützung des Tragflügelprofils 11 bewirkt und die freie Schwingungslänge halbiert. Dadurch wird einem möglichen Flattern des Windabweisers 10 durch die ankommende Luftströmung C entgegengewirkt.

Es besteht die Möglichkeit, anstelle eines Tragflügelprofils 11 auch ein tragflügelähnliches Profil zu verwenden, welches sich in Strömungsrichtung A gesehen kontinuierlich verkleinert und gerundete vordere bzw. hintere Randbereiche aufweist.

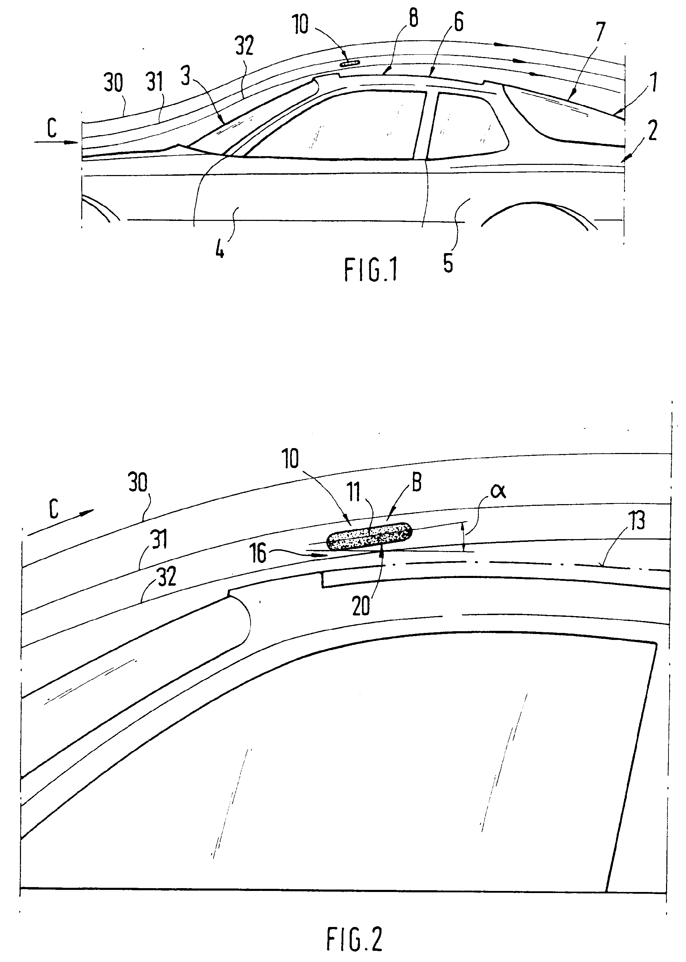

Die Fig. 1 und 2 zeigen die beidseitige Umströmung des Tragflügelprofils 11, wobei der die Fahrzeugoberseite passierende Luftstrom C durch die Strömungslinien 30,31 und 32 dargestellt ist. Die Strömungslinie 32 zeigt den Verlauf der Unterströmung des Tragflügelprofils 11, wogegen die Strömungslinien 30,31 die Überströmung des Tragflügelprofils 11 kennzeichnen.

Es besteht auch die Möglichkeit, den drehbaren Anlenkpunkt zwischen den hinteren Endbereich 19 und den Hebel 23 ortsfest ausbilden. Jedoch muß dann der aufbauseitige Anlenkpunkt 25 in Längsrichtung verschiebbar ausgebildet sein (in Fig.3 strichniert dargestellt) und zugleich muß die Schlitzführung 28 im Hebel 22 die gestrichelt dargestellte Lage 28′ einnehmen.

## Patentansprüche

1. Windabweiser (10) für Schiebedächer, herausnehmbare Dachabschnitte oder dergleichen von Kraftfahrzeugen, der von einem in Fahrzeugquerrichtung verlaufenden Tragflügelprofil (11) gebildet wird, das benachbart einem vorderen Rand eines Dachausschnittes (8) angeordnet und von einer versenkten Ruhestellung in eine hochgeschwenkte Betriebsstellung (B) bewegbar ist und umgekehrt, wobei das in der Betriebsstellung unter einem negativen Anstellwinkel α verlaufende Tragflügelprofil (11) eine ideelle Dachkontur zumindest abschnittsweise nach oben hin überragt, **dadurch gekennzeichnet**, daß das Tragflügelprofil (11) in der hochgeschwenkten Betriebsstellung B dergestalt angeordnet ist, daß ein beidseitiges Umströmen des Tragflügelprofils (11) durch den im Fahrbetrieb auftretenden Luftstrom C erfolgt.

2. Windabweiser nach Anspruch 1, **dadurch gekennzeichnet**, daß das Tragflügelprofil (11) unter Bildung eines Spaltes (16) zur darunterliegenden Dachkontur (13) verläuft.

3. Windabweiser nach Anspruch 1, **dadurch gekennzeichnet**, daß der Spalt (16) eine lichte Höhe H von etwa 5 bis 15 mm aufweist.

4. Windabweiser nach Anspruch 1, **dadurch gekennzeichnet**, daß sich die Querschnittsfläche des Tragflügelprofils (11) in Strömungsrichtung A gesehen verkleinert.

5. Windabweiser nach Anspruch 1, **dadurch gekennzeichnet**, daß die Höhe H des Spaltes (16) und der Anstellwinkel α des Tragflügelprofils (11) veränderbar sind.

6. Windabweiser nach Anspruch 1, **dadurch gekennzeichnet**, daß in der Betriebsstellung B eine vordere Begrenzungskante (14) des Tragflügelprofils (11) um ein Maß E nach hinten versetzt zum darunterliegenden Rand (12) des Dachausschnittes (8) verläuft.

7. Windabweiser nach Anspruch 1, **dadurch gekennzeichnet**, daß zumindest an beiden Längsseiten des Dachausschnittes (8) ein Verstellmechanismus (21) zum Bewegen des Windabweisers (10) von der Ruhestellung in die Betriebsstellung B und umgekehrt angeordnet ist.

8. Windabweiser nach Anspruch 7, **dadurch gekennzeichnet**, daß jeder Verstellmechanismus (21) zwei kreuzweise zueinander angeordnete Hebel (22, 23) umfaßt, wobei in der Betriebsstellung B ein erster Hebel (22) einen, in Fahrtrichtung D gesehen, vorderen Endbereich (18) des Windabweisers (10) mit einem hinteren dachseitigen Anlenkpunkt (24) verbindet, wogegen der zweite Hebel (23) zwischen einem hinteren Endbereich (19) des Windabweisers (10) und einem vorneliegenden dachseitigen Anlenkpunkt (25) verläuft und daß beide Hebel (22,23) im Kreuzungsbereich (26) in Wirkverbindung stehen, dergestalt, daß ein abgestellter Bolzen (27) des zweiten Hebel (23) in eine längliche Schlitzführung (28) des ersten Hebels (23) eingreift und in dieser verschiebbar geführt ist.

9. Windabweiser nach Anspruch 8, **dadurch gekennzeichnet**, daß die Verbindung des hinteren Endbereichs (19) des Windabweisers (10) mit dem Hebel (23) über einen abgestellten Bolzen (33) am Windabweiser (10) erfolgt, der in einer länglichen Schlitzführung (34) des Hebels (23) verschiebbar geführt ist.

10. Windabweiser nach Anspruch 1, **dadurch gekennzeichnet**, daß im mittleren Bereich der Quererstreckung des Tragflügelprofils (11) ein Federelement (29) vorgesehen ist, das das Tragflügelprofil (11) in Richtung ausgeschwenkte Betriebsstellung B beaufschlagt.

## Claims

1. A wind deflector (10) for sliding roofs, removable roof portions or the like of motor vehicles, which is formed by an aerofoil (11) extending in the transverse direction of the vehicle and arranged adjacent to a front edge of a roof opening (8) and movable from a lowered rest position into a raised operating position (B) and *vice versa*, wherein the aerofoil (11) extending in the operating position at a negative angle of incidence **α** extends upwards beyond an ideal roof profile at least in part, **characterized in that** the aerofoil (11) is arranged in such a way in the raised operating position **B** that the air stream **C** produced during travel flows around the aerofoil (11) on both sides.

2. A wind deflector according to Claim 1, **characterized in that** the aerofoil (11) extends towards the roof profile (13) lying thereunder so as to form a gap (16).

3. A wind deflector according to Claim 1, **characterized in that** the gap (16) has an internal height **H** of substantially from 5 to 15 mm.

4. A wind deflector according to Claim 1, **characterized in that** the cross-sectional area of the aerofoil (11) is reduced as viewed in the direction of flow **A**.

5. A wind deflector according to Claim 1, **characterized in that** the height **H** of the gap (16) and the angle of incidence **α** of the aerofoil (11) are variable.

6. A wind deflector according to Claim 1, **characterized in that** in the operating position **B** a front defining edge (14) of the aerofoil (11) extends rearwardly spaced by an amount **E** from the edge (12) of the roof opening (8) lying thereunder.

7. A wind deflector according to Claim 1, **characterized in that** a displacement mechanism (21) for moving the wind deflector (10) from the rest position into the operating position **B** and *vice versa* is arranged at least on the two longitudinal sides of the roof opening (8).

8. A wind deflector according to Claim 7, **characterized in that** each displacement mechanism (21) comprises two levers (22, 23) arranged cross-wise with respect to each other, wherein in the operating position **B** a first lever (22) connects a front end area (18) - as viewed in the direction of travel **D** - of the wind deflector (10) to a rear articulation point (24) on the roof, whereas the second lever (23) extends between a rear end area (19) of the wind deflector (10) and a forward articulation point (25) on the roof, and the two levers (22, 23) are operatively connected in the area of intersection, in such a way that a projecting pin (27) of the second lever (23) engages in an elongate slotted guide (28) in the first lever (23) [*sic*] and is guided displaceably therein.

9. A wind deflector according to Claim 8, **characterized in that** the rear end area (19) of the wind deflector (10) is connected to the lever (23) by way of a projecting pin (33) on the wind deflector (10), which is displaceably guided in an elongate slotted guide (34) in the lever (23).

10. A wind deflector according to Claim 1, **characterized in that** a resilient member (29) acting upon the wing-support section (11) in the direction of the swung-out operating position **B** is provided in the central region of the transverse extension of the aerofoil (11).

## Revendications

1. Déflecteur de vent (10) pour toits coulissants, parties de toit amovibles ou similaires de véhicules automobiles, qui est formé par un profilé aérodynamique (11), s'étendant dans la direction transversale du véhicule, situé à proximité d'un bord avant d'une découpe de toit (8) et est déplaçable depuis une position de repos encastrée dans une position de fonctionnement (B) pivotée vers le haut et inversement, le profilé aérodynamique (11) s'étendant en position de fonctionnement sous un angle d'inclinaison négatif (α) dépassant vers le haut, au moins en partie, d'un contour de toit imaginaire, caractérisé en ce que le profilé aérodynamique (11) est disposé, dans sa position de fonctionnement (B) pivotée vers le haut, de manière qu'il soit entouré de tous côtés par le courant d'air (C) se produisant pendant la marche.

2. Déflecteur de vent selon la revendication 1, caractérisé en ce que le profilé aérodynamique (11) s'étend en formant une fente (16) par rapport au contour du toit (13), situé au-dessous.

3. Déflecteur de vent selon la revendication 1, caractérisé en ce que la fente (16) présente une hauteur libre (H) comprise entre 5 et 15 mm.

4. Déflecteur de vent selon la revendication 1, caractérisé en ce que la surface de la section transversale du profilé aérodynamique (11) diminue dans le sens de l'écoulement (A).

5. Déflecteur de vent selon la revendication 1, caractérisé en ce que la hauteur (H) de la fente (16) et l'angle d'inclinaison (α) du profilé aérodynamique (11) sont variables.

6. Déflecteur de vent selon la revendication 1, caractérisé en ce qu'en position de fonctionnement (B), un bord de délimitation avant (14) du profilé aérodynamique (11) est décalé vers l'arrière d'un distance (E) par rapport au bord (12) situé au-dessous de la découpe de toit (8).

7. Déflecteur de vent selon la revendication 1, caractérisé en ce que sur les deux côtés longitudinaux au moins de la découpe de toit (8) il est prévu un mécanisme de réglage (21), pour déplacer le déflecteur de vent (10) de sa position de repos dans sa position de fonctionnement (B) et inversement.

8. Déflecteur de vent selon la revendication 7, caractérisé en te que chaque mécanisme de réglage (21) comporte deux leviers (22, 23) disposés en croix, un premier levier (22) reliant en position de fonctionnement (B), une zone terminale avant (18), vue dans le sens de la marche (D), du déflecteur (10) avec un point d'articulation (24) arrière, côté toit, tandis que le second levier (23) s'étend entre une zone terminale arrière (19) du défletteur (10) et un point d'articulation (25) avant, côté toit, et en ce que les deux leviers (22, 23) sont en liaison active dans la zone de croisement (26), de manière qu'un axe (27) saillant du second levier (23) s'engage dans une fente de guidage (28) allongée du premier levier (23) et est guidé coulissant dans celle-ci.

9. Déflecteur de vent selon la revendication 8, caractérisé en ce que la liaison entre la zone terminale arrière (19) du déflecteur (10) et le levier (23) s'effectue par l'intermédiaire d'un axe (33) saillant sur le déflecteur (10), guidé coulissant dans une fente de guidage (34) allongée du levier (23).

10. Déflecteur de vent selon la revendication 1, caractérisé en ce que dans la zone centrale de l'extension transversale du profilé aérodynamique (11), il est prévu un élément à ressort (29) qui agit sur le profilé aérodynamique (11) en direction de la position de fonctionnement (B) pivotée.
